# EUROPÄISCHE PATENTANMELDUNG

(11) **EP 4 170 840 A1**
(43) Veröffentlichungstag der Anmeldung: **26.04.2023**
(21) Anmeldenummer: 22198275.4
(22) Anmeldetag: 28.09.2022
(51) Int. Cl.: H02G 11/02, B65H 54/28, B65H 75/42, B65H 59/16, B65H 75/44

(54) **KABELTROMMEL ZUR ENERGIEVERSORGUNG EINES ELEKTRISCH BETRIEBENEN NUTZFAHRZEUGS**

(30) Priorität: 22.10.2021 DE 102021127562
(71) Anmelder: Deere & Company, Moline, IL 61265 (US)
(72) Erfinder: KLEIN, Andre, 68163 Mannheim (DE); DE MORAES BOOS, Felipe, 68163 Mannheim (DE); KEGEL, Volker, 68163 Mannheim (DE)
(74) Vertreter: Dehnhardt, Florian Christopher

(57) **Zusammenfassung**

Kabeltrommel (10) zur Energieversorgung eines elektrisch betriebenen Nutzfahrzeugs, mit einem insbesondere axial verlaufenden Wickelkörper (12), der sich mittels eines Wickelantriebs (22) zum Auf- und Abspulen einer elektrischen Leitung (20) in Drehung versetzen lässt, einem Kabelschlitten (28) zur Führung der elektrischen Leitung (20) derart, dass beim Auf- und Abspulen eine vorgegebene Einfallrichtung (30) gegenüber dem Wickelkörper (12) eingehalten wird, sowie einer insbesondere an einer tragenden Rahmenstruktur (14) angebrachte Kabelführung (40) zur Einspeisung der elektrischen Leitung (20) in den Kabelschlitten (28). Hierbei ist zwischen dem Kabelschlitten (28) und der Kabelführung (40) eine Spanneinrichtung (46) zur Erzeugung einer in Richtung eines aufgespulten Leitungsvorrats (48) auf die elektrische Leitung (20) wirkenden Vorspannung angeordnet.

## Beschreibung

Die Erfindung betrifft eine Kabeltrommel zur Energieversorgung eines elektrisch betriebenen Nutzfahrzeugs, mit einem insbesondere axial verlaufenden Wickelkörper, der sich mittels eines Wickelantriebs zum Auf- und Abspulen einer elektrischen Leitung in Drehung versetzen lässt, mit einem Kabelschlitten zur Führung der elektrischen Leitung derart, dass beim Auf- und Abspulen eine vorgegebene Einfallrichtung gegenüber dem Wickelkörper eingehalten wird, und mit einer insbesondere an einer tragenden Rahmenstruktur angebrachten Kabelführung zur Einspeisung der elektrischen Leitung in den Kabelschlitten.

Eine derartige Kabeltrommel ist beispielsweise aus der DE 10 2017 215 822 A1 bekannt. Da bei dieser die elektrische Leitung lose durch Kabelschlitten und Kabelführung verläuft, besteht die Möglichkeit, dass es beim Wickelvorgang aufgrund von äußeren Krafteinflüssen zu einem Verlust der Wickelspannung und damit zu einem übermäßigen Durchhängen der elektrischen Leitung zwischen Kabelführung und Kabelschlitten bis hin zur Schlaufenbildung des auf dem Wickelkörper befindlichen Leitungsvorrats kommt.

Es ist daher Aufgabe der vorliegenden Erfindung, eine Kabeltrommel der eingangs genannten Art im Sinne der Erzielung eines gleichmäßigen und reproduzierbaren Wickelvorgangs weiterzubilden.

Diese Aufgabe wird durch eine Kabeltrommel mit den Merkmalen des Patentanspruchs 1 gelöst.

Die erfindungsgemäße Kabeltrommel zur Energieversorgung eines elektrisch betriebenen Nutzfahrzeugs umfasst einen insbesondere axial verlaufenden Wickelkörper, der sich mittels eines Wickelantriebs zum Auf- und Abspulen einer elektrischen Leitung in Drehung versetzen lässt, einen Kabelschlitten zur Führung der elektrischen Leitung derart, dass beim Auf- und Abspulen eine vorgegebene Einfallrichtung gegenüber dem Wickelkörper eingehalten wird, sowie eine insbesondere an einer tragenden Rahmenstruktur angebrachte Kabelführung zur Einspeisung der elektrischen Leitung in den Kabelschlitten. Hierbei ist zwischen dem Kabelschlitten und der Kabelführung eine Spanneinrichtung zur Erzeugung einer in Richtung eines aufgespulten Leitungsvorrats auf die elektrische Leitung wirkenden Vorspannung angeordnet.

Die Verwendung der Spanneinrichtung erlaubt einerseits die Einhaltung einer definierten Wickelspannung beim Auf- und Abspulen der elektrischen Leitung, schirmt andererseits auch den auf dem Wickelkörper befindlichen Leitungsvorrat vor äußeren Krafteinflüssen, die jenseits der Kabelführung auf die elektrische Leitung einwirken, verlässlich ab. Auf diese Weise sind die Voraussetzungen für die Erzielung eines gleichmäßigen und reproduzierbaren Wickelvorgangs gegeben.

Der Kabelschlitten lässt sich zum Auf- und Abspulen der elektrischen Leitung mittels einer Stelleinrichtung axial verschieben. Die Stelleinrichtung umfasst ein innerhalb einer Führungsschiene gelagertes Gleitelement, an dem der eigentliche Kabelschlitten befestigt ist, wobei sich das Gleitelement mittels eines elektrischen Spindelantriebs innerhalb der Führungsschiene hin und her verfahren lässt. Eine Motorsteuerung betätigt den Wickelantrieb in Verbindung mit der Stelleinrichtung derart, dass durch Abstimmung der Drehung des Wickelkörpers mit der axialen Verschiebung des Kabelschlittens die elektrische Leitung gleichmäßig auf den Wickelkörper aufgespult wird. Umgekehrt wird beim Abspulen der elektrischen Leitung der Kabelschlitten derart positioniert, dass sich dieser stets senkrecht über dem aktuellen Abwickelpunkt befindet.

Alternativ kann anstelle eines elektrischen auch ein mechanischer Spindelantrieb vorgesehen sein, der über ein Getriebe geeigneter Übersetzung mit einer Drehung des Wickelkörpers gekoppelt ist.

Ein Einsatz der erfindungsgemäßen Kabeltrommel bietet sich aufgrund der zu erwartenden hohen Leistungsdichten insbesondere im Zusammenhang mit elektrisch betriebenen Nutzfahrzeugen an. So kann die Kabeltrommel zum Beispiel Bestandteil eines autonom fahrenden landwirtschaftlichen Traktors sein, dessen Fahr- bzw. Arbeitsaggregate mittels im Mittelspannungsbereich arbeitender Elektromotoren angetrieben werden. Die Kabeltrommel bzw. der Wickelkörper kann derart dimensioniert sein, dass sich darauf eine elektrische Leitung mit einer Länge von mehreren Kilometern unterbringen lässt. Die elektrische Leitung kann hierbei neben Adern zur Stromversorgung auch solche zur elektrischen und/oder optischen Datenübertragung umfassen.

Vorteilhafte Ausgestaltungen der erfindungsgemäßen Kabeltrommel gehen aus den Unteransprüchen hervor.

Vorzugsweise ist die Spanneinrichtung baulicher Bestandteil des Kabelschlittens oder der Kabelführung. Die erste Variante führt zu einer besonders kompakten Bauweise, da sich insbesondere eine separate Kabelführung einsparen lässt, wohingegen die zweite Variante es möglich macht, die Kabelführung räumlich unabhängig vom Kabelschlitten und damit den Abwurfpunkt der elektrischen Leitung in Richtung des Erdbodens an nahezu beliebiger Stelle eines mit der Kabeltrommel ausgestatteten Nutzfahrzeugs zu wählen.

Die Spanneinrichtung kann zur Erzeugung der Vorspannung eine Vielzahl motorisch antreibbarer Förderrollen aufweisen, mittels derer eine Zugkraft auf einen hindurchverlaufenden Leitungsabschnitt ausübbar ist. Genauer gesagt sind die Förderrollen jeweils paarweise übereinander angeordnet und mit einer konturierten und/oder gummierten Lauffläche zur Ineingriffnahme der elektrischen Leitung, genauer gesagt eines von dieser umfassten elastischen Außenmantels versehen. Um die auf den elastischen Außenmantel wirkende Zugkraft gleichmäßig zu verteilen, können in der Spanneinrichtung mehrere gleichartige Förderrollenpaare hintereinander in Reihe angeordnet sein. Die Förderrollenpaare lassen sich hierbei mittels eines motorischen Antriebs über ein Zahnradgetriebe in Drehung versetzen.

Im Sinne einer weiteren Schonung des elastischen Außenmantels der elektrischen Leitung kann vorgesehen sein, dass die Ausübung der Zugkraft auf den Leitungsabschnitt flächig mittels eines über die Förderrollen geführten Antriebsriemens erfolgt. Der Antriebsriemen kann hierbei als aus einer faserverstärkten Gummimischung hergestelltes Band ausgebildet sein. Vorzugsweise ist ein oberer und ein unterer Antriebsriemen vorhanden, wobei die beiden Antriebsriemen einen Förderkanal für die dazwischen verlaufende elektrische Leitung bilden.

Zusätzlich können die Förderrollen mit einer Anpressvorrichtung zusammenwirken, mittels derer ein mit dem hindurchverlaufenden Leitungsabschnitt hergestellter Reibschluss beeinflussbar ist. Der Reibschluss wird bevorzugt derart eingestellt, dass ein möglichst geringer Antriebsschlupf gegenüber dem Außenmantel der elektrischen Leitung auftritt. Sind die Förderrollen paarweise übereinander angeordnet, kann eine der beiden Förderrollen feststehend, die andere hingegen unter der Wirkung eines mechanischen oder pneumatischen Federelements beweglich in Richtung der feststehenden der beiden Förderrollen vorgespannt sein. Abweichend davon können auch sämtliche Förderrollen mit einer entsprechenden Anpressvorrichtung ausgestattet sein.

Der Begriff "übereinander" bezieht sich hierbei auf die gewöhnliche Betriebslage der Spanneinrichtung und bezeichnet eine im Wesentlichen senkrecht zur Förderrichtung der elektrischen Leitung verlaufende Ausrichtung.

Um unabhängig vom jeweiligen Eintritts- bzw. Austrittswinkel einen definierten Verlauf der elektrischen Leitung innerhalb der Spanneinrichtung zu gewährleisten, kann diese ein- und/oder auslassseitig vorgesehene Leitelemente zur Zentrierung des hindurchverlaufenden Leitungsabschnitts aufweisen. Bei den Leitelementen handelt es sich insbesondere um im Winkel von 90 Grad verdreht hintereinander angeordnete Leitwalzenpaare, die sich in einem Ein- bzw. Austrittsbereich der Spanneinrichtung befinden. Innerhalb der Spanneinrichtung können im Bereich zwischen den Förderrollen weitere Leitelemente angebracht sein, die der seitlichen Führung der elektrischen Leitung dienen.

Des Weiteren ist ein Steuersystem zur Verwendung in Verbindung mit der erfindungsgemäßen Kabeltrommel vorgesehen. Das Steuersystem umfasst eine Kontrolleinheit, die einen motorischen Antrieb einer Vielzahl von Förderrollen der Spanneinrichtung in Verbindung mit dem Wickelantrieb des insbesondere axial verlaufenden Wickelkörpers derart ansteuert, dass durch Anpassung der Kabelvorschubgeschwindigkeit V_{funnel} der Spanneinrichtung ein für eine Kabelwickelgeschwindigkeit v_{cable} des Wickelantriebs, eine mittels der Spanneinrichtung erzeugte und auf die elektrische Leitung wirkende Vorspannung σ_{cable} und/oder einen zulässigen Kabeldurchhang Δh_{cable} ein jeweils vorgegebener Sollwert eingeregelt wird. Eine Einregelung des Kabeldurchhangs Δh_{cable} ist hierbei für den Fall vorgesehen, dass die Spanneinrichtung baulicher Bestandteil der räumlich vom Kabelschlitten beabstandeten Kabelführung ist. Die Sollwerte hinsichtlich Vorspannung σ_{cable} und/oder Kabeldurchhang Δh_{cable} werden hierbei unter Berücksichtigung der Zugbelastbarkeit der verwendeten elektrischen Leitung sowie der zu erreichenden Wickelgüte optimiert.

Hinsichtlich des motorischen Antriebs der Förderrollen wie auch des Wickelantriebs kann eine drehmomentbasierte Regelung zugehöriger elektrischer Servomotoren erfolgen. Zur Einregelung der für die Kabelwickelgeschwindigkeit v_{cable}, die zu erzeugende Vorspannung σ_{cable} und/oder den zulässigen Kabeldurchhang Δh_{cable} vorgegebenen Sollwerte werden der Kontrolleinheit unter anderem Istwerte von an den Förderrollen der Spanneinrichtung bzw. dem Wickelkörper auftretenden Winkelgeschwindigkeiten ω_{funnel}, ω_{drum} zugeführt, wobei diese mittels zugehöriger Drehzahlsensoren erfasst werden. Für den Fall, dass die Spanneinrichtung baulicher Bestandteil der räumlich vom Kabelschlitten beabstandeten Kabelführung ist, wird ferner die von der Stelleinrichtung erfasste aktuelle Relativposition P_{xyz} des verfahrbaren Kabelschlittens gegenüber der fest angeordneten Kabelführung miteinbezogen, um einer insofern verursachten Beeinflussung der Drehmomentverhältnisse entsprechend Rechnung zu tragen.

Bei der Ermittlung der Kabelvorschubgeschwindigkeit V_{funnel} aus der Winkelgeschwindigkeit ω_{funnel} der Förderrollen ist zusätzlich der gegenüber dem Außenmantel der elektrischen Leitung auftretende Antriebsschlupf zu berücksichtigen. Da dieser nicht exakt bekannt ist und von äußeren Einflüssen wie Verschmutzungsgrad und Erhaltungszustand des meist aus Kunststoff bestehenden Außenmantels der elektrischen Leitung abhängt, bietet sich alternativ auch eine berührungslose direkte Erfassung der Kabelvorschubgeschwindigkeit V_{funnel} mittels eines Laser-Encoders oder dergleichen an. Hinsichtlich der Bestimmung der Kabelwickelgeschwindigkeit v_{cable} ist ein gegebenenfalls auftretender Antriebsschlupf ohne Belang, sodass diese unmittelbar aus der Winkelgeschwindigkeit ω_{drum} des Wickelkörpers unter Beachtung des aktuellen Bewicklungszustands berechnet werden kann.

Des Weiteren erfolgt eine Rückmeldung der Istwerte der auf die elektrische Leitung wirkenden Vorspannung σ_{cable} und gegebenenfalls des Kabeldurchhangs Δh_{cable}. Letzterer lässt sich durch Verwendung eines elektromechanischen Messfühlers, wie er beispielsweise aus EP 3 355 429 A1 bekannt ist, bestimmen.

Alternativ kann dessen Bestimmung auch berührungslos auf Grundlage einer sensoroptisch durchgeführten Lageermittlung des zwischen Kabelschlitten und Kabelführung verlaufenden Leitungsabschnitts erfolgen.

Um unerwünschte Schwankungen der Vorspannung aufgrund trägheitsbedingter Verzögerungen insbesondere für den Fall einer drehmomentbasierten Regelung der elektrischen Servomotoren zu verringern, kann vorgesehen sein, dass die Kontrolleinheit eine drehzahlbasierte Vorsteuerung der Kabelvorschubgeschwindigkeit V_{funnel} der Spanneinrichtung gegenüber der Kabelwickelgeschwindigkeit v_{cable} vornimmt.

Die Kontrolleinheit kann die auf die elektrische Leitung wirkende Vorspannung bzw. den diese repräsentierenden Istwert aufgrund einer zugbedingten Rückwirkung auf den motorischen Antrieb der Förderrollen der Spanneinrichtung ermitteln. Hierbei sind im Falle der Verwendung eines elektrischen Servomotors lastbedingte Variationen des Stromverbrauchs auswertbar.

Für den Fall, dass die Spanneinrichtung eine sensorische Erfassung von Umfang und Richtung einer an wenigstens einer der Förderrollen auftretenden Umdrehung vorsieht, besteht zudem die Möglichkeit, dass die Kontrolleinheit die Länge der abgespulten elektrischen Leitung nach Maßgabe der erfassten Umdrehungen ermittelt. Derartige Informationen sind insbesondere zur Beurteilung des auf dem Wickelkörper aktuell befindlichen Leitungsvorrats im Hinblick auf eine Abschätzung des aktuellen Bewicklungszustands von Bedeutung.

Die erfindungsgemäße Kabeltrommel wird im Folgenden anhand der beigefügten Zeichnungen näher beschrieben. Dabei beziehen sich identische Bezugszeichen auf übereinstimmende oder bezüglich ihrer Funktion vergleichbare Komponenten. Es zeigen:
- Fig. 1: ein Ausführungsbeispiel der erfindungsgemäßen Kabeltrommel zur Energieversorgung eines elektrisch betriebenen Nutzfahrzeugs,
- Fig. 2: eine Ansicht einer von der Kabeltrommel gemäß Fig. 1 umfassten Spanneinrichtung,
- Fig. 3: eine Innenansicht der in Fig. 2 wiedergegebenen Spanneinrichtung,
- Fig. 4: ein Steuersystem zur Verwendung in Verbindung mit der Kabeltrommel gemäß Fig. 1, und
- Fig. 5: ein mit der erfindungsgemäßen Kabeltrommel ausgestattetes elektrisch betriebenes Nutzfahrzeug in Gestalt eines autonom fahrenden landwirtschaftlichen Traktors.

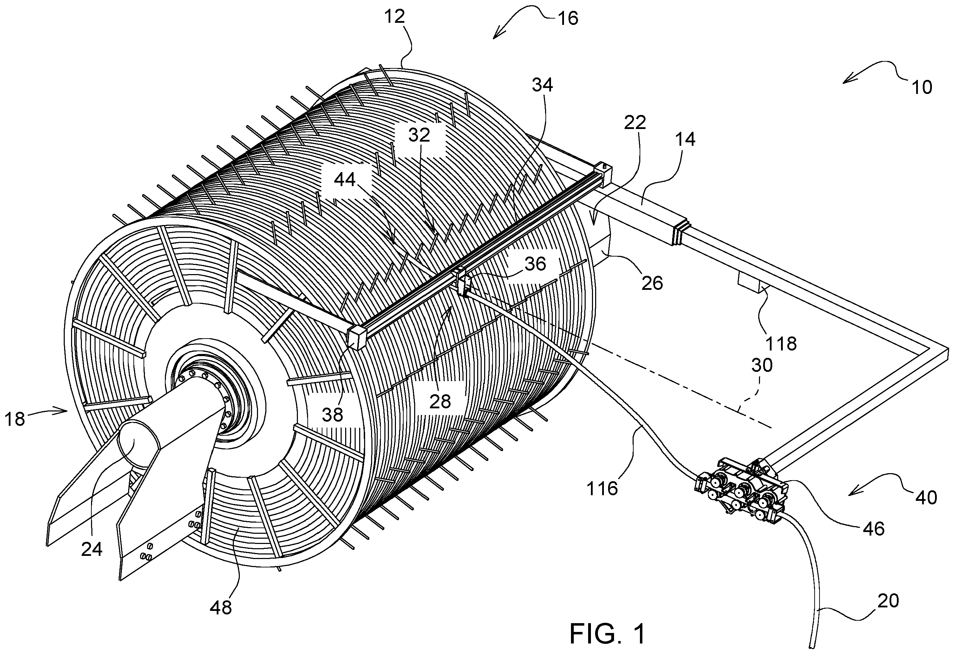

Fig. 1 zeigt ein Ausführungsbeispiel der erfindungsgemäßen Kabeltrommel zur Energieversorgung eines elektrisch betriebenen Nutzfahrzeugs.

Die Kabeltrommel 10 umfasst einen vorliegend axial verlaufenden Wickelkörper 12, der innerhalb einer tragenden Rahmenstruktur 14 an seinen axialen Stirnseiten 16, 18 drehbar gelagert ist, sodass sich der Wickelkörper 12 zum Auf- und Abspulen einer elektrischen Leitung 20 mittels eines zugehörigen Wickelantriebs 22 in Drehung versetzen lässt.

Bei dem Wickelantrieb 22 handelt es sich um einen mit einer Drehachse 24 des Wickelkörpers 12 verbundenen elektrischen Servomotor 26.

Die elektrische Leitung 20 wird beim Auf- und Abspulen mittels eines Kabelschlittens 28 in einer vorgegebenen Einfallrichtung 30 gegenüber dem Wickelkörper 12 geführt. Der Kabelschlitten 28 lässt sich zum reproduzierbaren Auf- und Abspulen der elektrischen Leitung 20 mittels einer Stelleinrichtung 32 axial verschieben. Die Stelleinrichtung 32 umfasst ein innerhalb einer Führungsschiene 34 gelagertes Gleitelement 36, an dem der eigentliche Kabelschlitten 28 befestigt ist, wobei sich das Gleitelement 36 mittels eines elektrischen Spindelantriebs 38 innerhalb der Führungsschiene 34 hin und her verfahren lässt.

Neben dem verstellbaren Kabelschlitten 28 ist ferner eine starr an der tragenden Rahmenstruktur 14 angebrachte Kabelführung 40 vorhanden, die der Einspeisung der elektrischen Leitung 20 in den Kabelschlitten 28 dient.

Hierbei betätigt eine Motorsteuerung 42 die Stelleinrichtung 32 nach Maßgabe des Wickelantriebs 22 derart, dass durch Abstimmung der Drehung des Wickelkörpers 12 mit der axialen Verschiebung des Kabelschlittens 28 die elektrische Leitung 20 gleichmäßig auf den Wickelkörper 12 aufgespult wird. Umgekehrt wird beim Abspulen der elektrischen Leitung 20 der Kabelschlitten 28 derart positioniert, dass sich dieser stets senkrecht über dem aktuellen Abwickelpunkt 44 befindet.

Wie sich in Fig. 1 erkennen lässt, ist zwischen dem Kabelschlitten 28 und der Kabelführung 40 eine Spanneinrichtung 46 angeordnet. Die Spanneinrichtung 46 erlaubt es, eine in Richtung eines aufgespulten Leitungsvorrats 48 auf die elektrische Leitung 20 wirkende Vorspannung zu erzeugen.

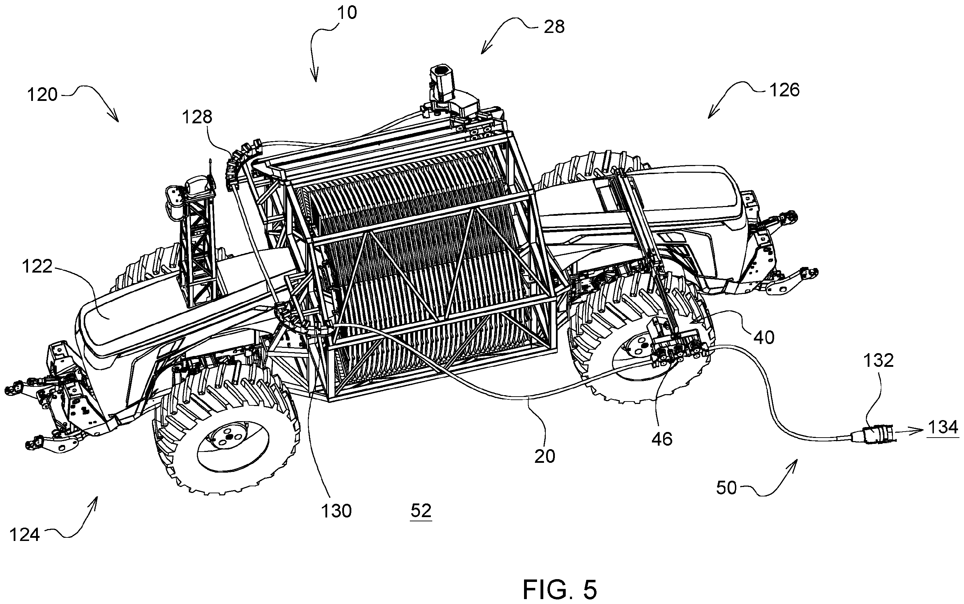

Die Spanneinrichtung 46 ist vorliegend baulicher Bestandteil der Kabelführung 40. Dies macht es möglich, die Kabelführung 40 räumlich unabhängig vom Kabelschlitten 28 und damit den Abwurfpunkt 50 der elektrischen Leitung 20 in Richtung des Erdbodens 52 an nahezu beliebiger Stelle eines mit der Kabeltrommel 10 ausgestatteten Nutzfahrzeugs zu wählen (siehe hierzu den in Fig. 5 abgebildeten landwirtschaftlichen Traktor) .

Abweichend davon kann die Spanneinrichtung 46 auch baulicher Bestandteil des Kabelschlittens 28 sein. Eine separate Kabelführung 40 lässt sich in diesem Fall einsparen.

Die Verwendung der Spanneinrichtung 46 erlaubt einerseits die Einhaltung einer definierten Wickelspannung beim Auf- und Abspulen der elektrischen Leitung 20, schirmt andererseits auch den auf dem Wickelkörper 12 befindlichen Leitungsvorrat 48 vor äußeren Krafteinflüssen, die jenseits der Kabelführung 40 auf die elektrische Leitung 20 wirken, verlässlich ab. Auf diese Weise sind die Voraussetzungen für die Erzielung eines gleichmäßigen und reproduzierbaren Wickelvorgangs gegeben.

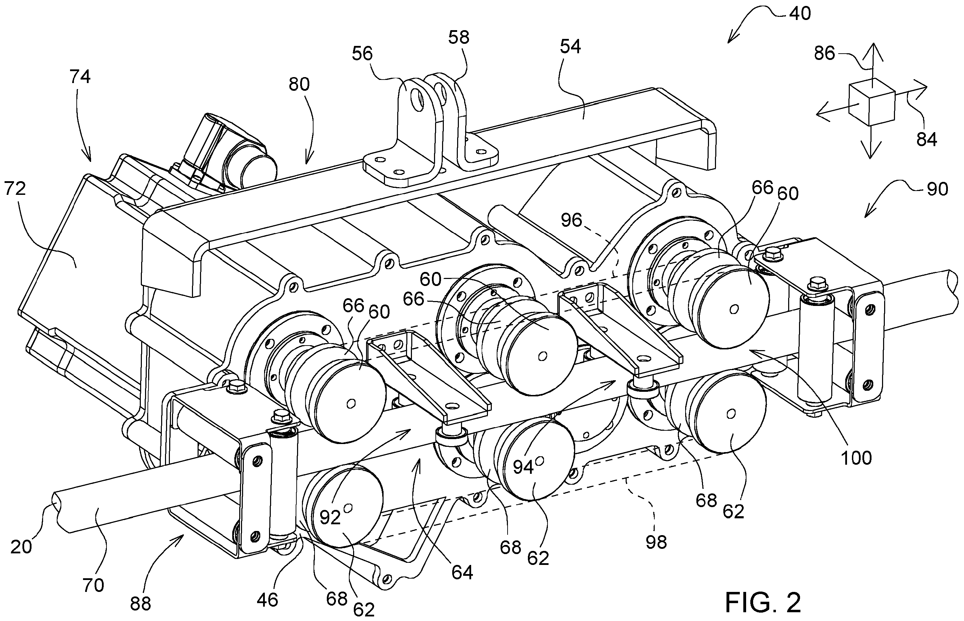

In Fig. 2 ist die Kabelführung 40 einschließlich der von dieser umfassten Spanneinrichtung 46 im Detail zu sehen. Diese ist mittels zweier an einer Gehäuseoberseite 54 ausgebildeter Befestigungsschenkel 56, 58 an der tragenden Rahmenstruktur 14 der Kabeltrommel 10 montierbar.

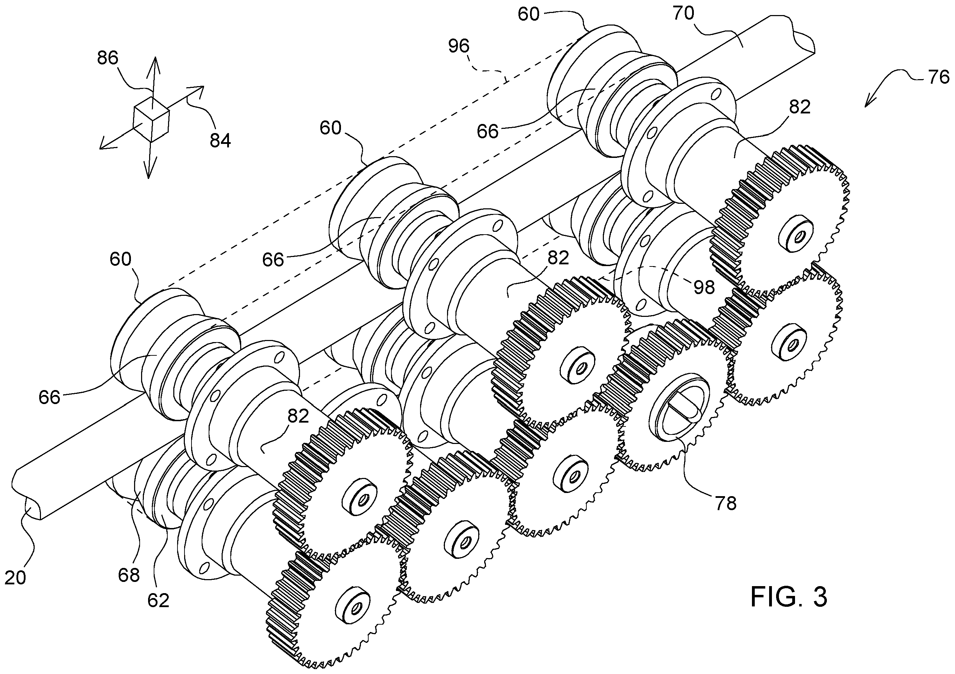

Die Spanneinrichtung 46 weist zur Erzeugung der Vorspannung eine Vielzahl motorisch antreibbarer Förderrollen 60, 62 auf, mittels derer eine Zugkraft auf einen hindurchverlaufenden Leitungsabschnitt 64 ausübbar ist. Genauer gesagt sind die Förderrollen 60, 62 jeweils paarweise übereinander angeordnet und mit einer konturierten und/oder gummierten Lauffläche 66, 68 zur Ineingriffnahme der elektrischen Leitung 20, genauer gesagt eines von dieser umfassten elastischen Außenmantels 70 versehen. Zur gleichmäßigen Verteilung der auf den elastischen Außenmantel 70 wirkenden Zugkraft sind in der Spanneinrichtung 46 mehrere gleichartige Förderrollenpaare 60, 62 hintereinander in Reihe angeordnet. Die Förderrollenpaare 60, 62 lassen sich hierbei mittels eines als elektrischer Servomotor 72 ausgebildeten motorischen Antriebs 74 über ein in Fig. 3 separat dargestelltes Zahnradgetriebe 76 über eine Eingangswelle 78 in Drehung versetzen.

Das Gehäuse 80 der Spannvorrichtung 44 ist einseitig offen, sodass die Förderrollen 60, 62 zu Reinigungs- und Wartungszwecken von außen leicht zugänglich sind.

Die Förderrollen 60, 62 wirken ferner mit einer integrierten Anpressvorrichtung 82 zusammen, mittels derer ein mit dem hindurchverlaufenden Leitungsabschnitt 64 hergestellter Reibschluss beeinflussbar ist. Der Reibschluss wird derart eingestellt, dass ein möglichst geringer Antriebsschlupf gegenüber dem Außenmantel 70 der elektrischen Leitung 20 auftritt. Sind die Förderrollen 60, 62 wie hier paarweise übereinander angeordnet, so ist eine der beiden Förderrollen 60, 62 feststehend, die andere hingegen unter der Wirkung eines von der Anpressvorrichtung 82 umfassten (in Fig. 3 nicht zu erkennenden) mechanischen oder pneumatischen Federelements beweglich in Richtung der feststehenden der beiden Förderrollen 60, 62 vorgespannt. Abweichend davon können auch sämtliche Förderrollen 60, 62 mit einer entsprechenden Anpressvorrichtung 82 ausgestattet sein.

Der Begriff "übereinander" bezieht sich hierbei auf die gewöhnliche Betriebslage der Spanneinrichtung 46 und bezeichnet eine im Wesentlichen senkrecht zur Förderrichtung 84 der elektrischen Leitung 20 verlaufende Ausrichtung 86.

Des Weiteren weist die Spanneinrichtung 46 ein- und/oder auslassseitig vorgesehene Leitelemente 88, 90 zur Zentrierung des hindurchverlaufenden Leitungsabschnitts 64 auf. Hierdurch lässt sich unabhängig vom jeweiligen Eintritts- bzw. Austrittswinkel ein definierter Verlauf der elektrischen Leitung 20 innerhalb der Spanneinrichtung 46 gewährleisten. Bei den Leitelementen 88, 90 handelt es sich um im Winkel von 90 Grad verdreht hintereinander angeordnete Leitwalzenpaare, die sich in einem Ein- bzw. Austrittsbereich der Spanneinrichtung 46 befinden. Innerhalb der Spanneinrichtung 46 sind im Bereich zwischen den Förderrollen 60, 62 weitere Leitelemente 92, 94 angebracht, die der seitlichen Führung der elektrischen Leitung 20 dienen.

An dieser Stelle sei angemerkt, dass die Ausübung der Zugkraft auf den Leitungsabschnitt 64 auch flächig mittels eines über die Förderrollen 60, 62 geführten und in Fig. 2 strichliniert angedeuteten Antriebsriemens 96, 98 erfolgen kann. Der Antriebsriemen ist hierbei als aus einer faserverstärkten Gummimischung hergestelltes Band ausgebildet. Genauer gesagt ist ein oberer und ein unterer Antriebsriemen 96, 98 vorhanden, wobei die beiden Antriebsriemen 96, 98 einen Förderkanal 100 für die dazwischen verlaufende elektrische Leitung 20 bilden.

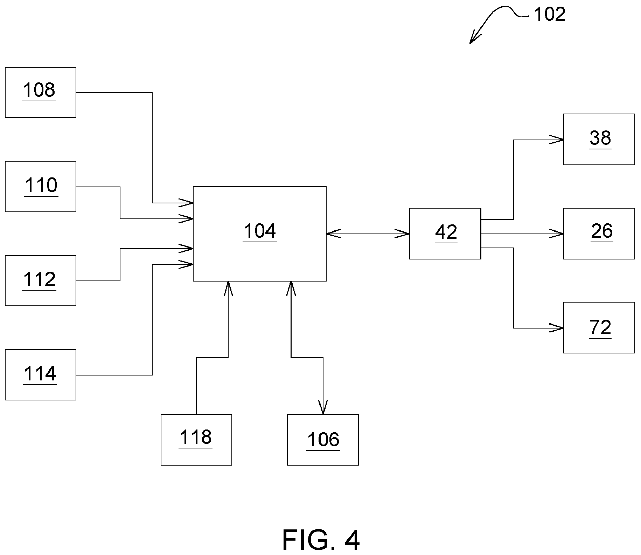

Fig. 4 zeigt ein Steuersystem 102 zur Verwendung in Verbindung mit der in Fig. 1 wiedergegebenen Kabeltrommel 10.

Das Steuersystem 102 umfasst eine mikroprozessorgesteuerte Kontrolleinheit 104, die mit der Motorsteuerung 42 zum Betrieb der beiden elektrischen Servomotoren 26, 72 sowie des elektrischen Spindelantriebs 38 der Stelleinrichtung 32 in Verbindung steht.

Hierbei steuert die Kontrolleinheit 104 den motorischen Antrieb 74 der Förderrollen 60, 62 in Verbindung mit dem Wickelantrieb 22 des axial verlaufenden Wickelkörpers 12 derart an, dass durch Anpassung der Kabelvorschubgeschwindigkeit v_{funnel} der Spanneinrichtung 46 ein für eine Kabelwickelgeschwindigkeit v_{cable} des Wickelantriebs 22, eine mittels der Spanneinrichtung 46 erzeugte und auf die elektrische Leitung 20 wirkende Vorspannung σ_{cable}, und/oder einen zulässigen Kabeldurchhang Δh_{cable} ein jeweils vorgegebener Sollwert eingeregelt wird. Die Sollwerte hinsichtlich Vorspannung σ_{cable} und/oder Kabeldurchhang Δh_{cable} werden hierbei unter Berücksichtigung der Zugbelastbarkeit der verwendeten elektrischen Leitung 20 sowie der zu erreichenden Wickelgüte optimiert und sind in einer mit der Kontrolleinheit 104 kommunizierenden Speichereinheit 106 abgelegt. Der Sollwert der Kabelwickelgeschwindigkeit v_{cable} hingegen ergibt sich aufgrund äußerer Anforderungen, wie beispielweise der Fahrtgeschwindigkeit des Nutzfahrzeugs beim Ablegen bzw. Wiederaufnehmen der elektrischen Leitung 20 während des Betriebs (siehe Fig. 5).

Hinsichtlich des motorischen Antriebs 74 der Förderrollen 60, 62 wie auch des Wickelantriebs 22 erfolgt eine drehmomentbasierte Regelung der beiden elektrischen Servomotoren 26, 72. Zur Einregelung der für die Kabelwickelgeschwindigkeit v_{cable,} die zu erzeugende Vorspannung σ_{cable}, und/oder den zulässigen Kabeldurchhang Δh_{cable} vorgegebenen Sollwerte werden der Kontrolleinheit 104 unter anderem Istwerte von an den Förderrollen 60, 62 der Spanneinrichtung 46 bzw. des Wickelkörpers 12 auftretenden Winkelgeschwindigkeiten ω_{funnel}, ω_{drum} zugeführt, wobei diese mittels zugehöriger inkrementaler Drehgeber 108, 110 erfasst werden. Ferner wird die von der Stelleinrichtung 32 mittels eines linearen Positionssensors 112 erfasste aktuelle Relativposition P_{xyz} des verfahrbaren Kabelschlittens 28 gegenüber der fest angeordneten Kabelführung 40 miteinbezogen, um einer insofern verursachten Beeinflussung der Drehmomentverhältnisse entsprechend Rechnung zu tragen.

Bei der Ermittlung der Kabelvorschubgeschwindigkeit V_{funnel} aus der Winkelgeschwindigkeit ω_{funnel} der Förderrollen 60, 62 wird von der Kontrolleinheit 104 zusätzlich der gegenüber dem Außenmantel 70 der elektrischen Leitung 20 auftretende Antriebsschlupf berücksichtigt. Da dieser nicht exakt bekannt ist und von äußeren Einflüssen wie Verschmutzungsgrad und Erhaltungszustand des meist aus Kunststoff bestehenden Außenmantels 70 der elektrischen Leitung 20 abhängt, kann alternativ auch eine berührungslose direkte Erfassung der Kabelvorschubgeschwindigkeit V_{funnel} mittels eines Laser-Encoders 114 erfolgen. Hinsichtlich der Bestimmung der Kabelwickelgeschwindigkeit v_{cable} ist ein gegebenenfalls auftretender Antriebsschlupf ohne Belang, sodass diese unmittelbar aus der Winkelgeschwindigkeit ω_{drum} des Wickelkörpers 12 unter Beachtung des aktuellen Bewicklungszustands berechnet wird.

Der inkrementale Drehgeber 110 der Spanneinrichtung 46 erfasst sensorisch Umfang und Richtung einer an wenigstens einer der Förderrollen 60, 62 auftretenden Umdrehung, woraus die Kontrolleinheit 104 wiederum auf die Länge der abgespulten elektrischen Leitung 20 und damit auf den aktuellen Bewicklungszustand des Wickelkörpers 12 schließt.

Des Weiteren werden an die Kontrolleinheit 104 die Istwerte der auf die elektrische Leitung 20 wirkenden Vorspannung σ_{cable} und des Kabeldurchhangs Δh_{cable} rückgemeldet. Letzterer lässt sich durch Verwendung eines elektromechanischen Messfühlers, wie er beispielsweise aus EP 3 355 429 A1 bekannt ist, bestimmen. Vorliegend erfolgt dessen Bestimmung jedoch berührungslos auf Grundlage einer sensoroptisch durchgeführten Lageermittlung des zwischen Kabelschlitten 28 und Kabelführung 40 verlaufenden Leitungsabschnitts 116, wozu an der tragenden Rahmenstruktur 14 eine bildgebende Einrichtung 118 vorgesehen ist.

Die Kontrolleinheit 104 ermittelt die auf die elektrische Leitung 20 wirkende Vorspannung σ_{cable} bzw. den diese repräsentierenden Istwert aufgrund einer zugbedingten Rückwirkung auf den motorischen Antrieb 74 der Förderrollen 60, 62 der Spanneinrichtung 46. Hierbei werden im Falle der Verwendung des elektrischen Servomotors 72 lastbedingte Variationen des Stromverbrauchs über die Motorsteuerung 42 ausgewertet.

Um trägheitsbedingte Verzögerungen im Zusammenhang mit der drehmomentbasierten Regelung der elektrischen Servomotoren 26, 72 zu verringern, ist vorgesehen, dass die Kontrolleinheit 104 eine drehzahlbasierte Vorsteuerung der Kabelvorschubgeschwindigkeit V_{funnel} der Spanneinrichtung 46 gegenüber der Kabelwickelgeschwindigkeit v_{cable} vornimmt.

Fig. 5 zeigt ein mit der erfindungsgemäßen Kabeltrommel 10 ausgestattetes elektrisch betriebenes Nutzfahrzeug 120 in Gestalt eines autonomen fahrenden landwirtschaftlichen Traktors 122, dessen Fahr- bzw. Arbeitsaggregate (nicht dargestellt) mittels im Mittelspannungsbereich arbeitender Elektromotoren angetrieben werden.

Beispielsgemäß bildet die Kabeltrommel 10 ein zentrales Strukturelement, das vordere und hintere elektrische Antriebseinheiten 124, 126 des landwirtschaftlichen Traktors 122 miteinander verbindet. Wie zu erkennen ist, wird die abgespulte elektrische Leitung 20 hier entlang erster und zweiter Umlenkstellen 128, 130 bis zur Spannvorrichtung 46 und von dort bis zum Abwurfpunkt 50 der elektrischen Leitung 20 in Richtung des Erdbodens 52 umgeleitet.

Die elektrische Leitung 20 kann hierbei neben Adern zur Stromversorgung auch solche zur elektrischen und/oder optischen Datenübertragung umfassen. Am Ende der elektrischen Leitung 20 befindet sich ein Steckverbinder 132 zum Anschluss an eine insbesondere in einem Feldrandbereich befindliche Energieversorgungstation 134.

## Patentansprüche

1. Kabeltrommel zur Energieversorgung eines elektrisch betriebenen Nutzfahrzeugs, mit einem insbesondere axial verlaufenden Wickelkörper (12), der sich mittels eines Wickelantriebs (22) zum Auf- und Abspulen einer elektrischen Leitung (20) in Drehung versetzen lässt, einem Kabelschlitten (28) zur Führung der elektrischen Leitung (20) derart, dass beim Auf- und Abspulen eine vorgegebene Einfallrichtung (30) gegenüber dem Wickelkörper (12) eingehalten wird, sowie einer insbesondere an einer tragenden Rahmenstruktur (14) angebrachte Kabelführung (40) zur Einspeisung der elektrischen Leitung (20) in den Kabelschlitten (28), **dadurch gekennzeichnet, dass** zwischen dem Kabelschlitten (28) und der Kabelführung (40) eine Spanneinrichtung (46) zur Erzeugung einer in Richtung eines aufgespulten Leitungsvorrats (48) auf die elektrische Leitung (20) wirkenden Vorspannung angeordnet ist.

2. Kabeltrommel nach Anspruch 1, **dadurch gekennzeichnet, dass** die Spanneinrichtung (46) baulicher Bestandteil des Kabelschlittens (28) oder der Kabelführung (40) ist.

3. Kabeltrommel nach Anspruch 1 oder 2, **dadurch gekennzeichnet, dass** die Spanneinrichtung (46) zur Erzeugung der Vorspannung eine Vielzahl motorisch antreibbarer Förderrollen (60, 62) aufweist, mittels derer eine Zugkraft auf einen hindurchverlaufenden Leitungsabschnitt (64) ausübbar ist.

4. Kabeltrommel nach Anspruch 3, **dadurch gekennzeichnet, dass** die Ausübung der Zugkraft auf den Leitungsabschnitt (64) flächig mittels eines über die Förderrollen (60, 62) geführten Antriebsriemens (96, 98) erfolgt.

5. Kabeltrommel nach Anspruch 3 oder 4, **dadurch gekennzeichnet, dass** die Förderrollen (60, 62) mit einer Anpressvorrichtung (82) zusammenwirken, mittels derer ein mit dem hindurchverlaufenden Leitungsabschnitt (64) hergestellter Reibschluss beeinflussbar ist.

6. Kabeltrommel nach wenigstens einem der vorhergehenden Ansprüche 3 bis 5, **dadurch gekennzeichnet, dass** die Spanneinrichtung (46) ein- und/oder auslassseitig vorgesehene Leitelemente (88, 90) zur Zentrierung des hindurchverlaufenden Leitungsabschnitts (64) aufweist.

7. Steuersystem für eine Kabeltrommel nach wenigstens einem der vorhergehenden Ansprüche, **dadurch gekennzeichnet, dass** eine Kontrolleinheit (104) einen motorischen Antrieb (74) einer Vielzahl von Förderrollen (60, 62) der Spanneinrichtung (46) in Verbindung mit dem Wickelantrieb (22) des insbesondere axial verlaufenden Wickelkörpers (12) derart ansteuert, dass durch Anpassung der Kabelvorschubgeschwindigkeit (v_{funnel}) der Spanneinrichtung (46) ein für eine Kabelwickelgeschwindigkeit (v_{cable}) des Wickelantriebs (22), eine mittels der Spanneinrichtung (46) erzeugte und auf die elektrische Leitung (20) wirkende Vorspannung (σ_{cable}) und/oder einen zulässigen Kabeldurchhang (Δh_{cable}) ein jeweils vorgegebener Sollwert eingeregelt wird.

8. Steuersystem nach Anspruch 7, **dadurch gekennzeichnet, dass** die Kontrolleinheit (104) eine drehzahlbasierte Vorsteuerung der Kabelvorschubgeschwindigkeit (v_{funnel}) der Spanneinrichtung (46) gegenüber der Kabelwickelgeschwindigkeit (v_{cable}) vornimmt.

9. Steuersystem nach Anspruch 7 oder 8, **dadurch gekennzeichnet, dass** die Kontrolleinheit (104) die auf die elektrische Leitung (20) wirkende Vorspannung aufgrund einer zugbedingten Rückwirkung auf den motorischen Antrieb (74) der Förderrollen (60, 62) der Spanneinrichtung (46) ermittelt.

10. Steuersystem nach wenigstens einem der Ansprüche 7 bis 9, **dadurch gekennzeichnet, dass** die Spanneinrichtung (46) eine sensorische Erfassung von Umfang und Richtung einer an wenigstens einer der Förderrollen (60, 62) auftretenden Umdrehung vorsieht, wobei die Kontrolleinheit (104) die Länge der abgespulten elektrischen Leitung (20) nach Maßgabe der erfassten Umdrehungen ermittelt.
